# EUROPEAN PATENT SPECIFICATION

(11) **EP 4 237 894 B1**
(45) Date of publication and mention of the grant of the patent: **30.09.2026**
(21) Application number: 20859679.1
(22) Date of filing: 29.10.2020
(51) Int. Cl.: G02B 21/24, G02B 26/08, G02B 19/00

(54) **DEVICE FOR CONTROLLING THE AXIAL POSITION OF A LASER FOCAL POINT PRODUCED BY A MICROSCOPE OBJECTIVE**
VORRICHTUNG ZUR KONTROLLE DER AXIALEN LAGE EINES VON EINEM MIKROSKOPOBJEKTIV ERZEUGTEN LASERFOKUSPUNKTES
DISPOSITIF DE COMMANDE DE LA POSITION AXIALE D'UN FOYER LASER PRODUIT PAR UN OBJECTIF DE MICROSCOPE

(43) Date of publication of application: 06.09.2023
(73) Proprietor: Sorbonne Université, 75006 Paris (FR); Centre National de la Recherche Scientifique, 75016 Paris (FR)
(72) Inventor: HALIYO, Sinan, 75005 Paris (FR); RÉGNIER, Stéphane, 75005 Paris (FR); GERENA, Edison, 75005 Paris (FR)
(74) Representative: Cabinet Beau de Loménie
(86) International application number: PCT/IB2020/001123
(87) International publication number: WO 2022/090760

(56) References cited:
- EP-A1- 1 744 194
- US-A1- 2020 018 940
- GERENA EDISON ET AL: "High-Bandwidth 3-D Multitrap Actuation Technique for 6-DoF Real-Time Control of Optical Robots", IEEE ROBOTICS AND AUTOMATION LETTERS, IEEE, vol. 4, no. 2, 1 April 2019 (2019-04-01), pages 647 - 654, XP011707284, DOI: 10.1109/LRA.2019.2892393

## Description

The present invention is related to a device for controlling the axial position of a laser focal point produced by a microscope objective. In particular, the device according to the invention can be used for different applications where high-speed 3D focal spot scanning is necessary such as optogenics, optical manipulation, confocal microscopy, two-photon microscopy or two-photon polymerisation.

It is usual to use a microscope objective to strongly focalize a laser beam. The location of the laser focal point is determined by the angle of incidence (in the planar axis X, Y) and the degree of collimation (in the axial axis Z) of the laser beam that reaches the entrance of the microscope objective. The quality of the focused laser spots (for instance in optical manipulation the stability of the traps) is very dependent on the quality of the beam that reaches the entrance of the microscope objective. However, given the correlation between the beam that reaches the objective and the focal point, it is difficult to change the three-dimensional position of the focal point without distorting its shape and introducing aberrations that will degrade its performance.

To overcome these constraints in the axial direction of the laser beam, it is known to use a deformable mirror which can focus or defocus the laser beam on the axial axis.

Deformable mirrors are mirrors whose curvature can be dynamically changed. They contain an array of actuators allowing a parabolic deflection of their surface, changing the mirror focal length.

However, deformable mirrors have a small surface deflection, with a maximum stroke of for instance of 5 µm, and a high settling times of for instance 5 ms (10-90%).

Consequently, the known devices are limited to a narrow working space of the laser focal point and a full scale bandwidth of the deformable mirror of for instance 200 Hz. These two limitations restrain the working space in which the laser focal point is produced and the scanning frequency at which the laser focal point can be moved between a set of arbitrary positions. This brings restrictions to the different applications, for instance in the imaging systems (such as confocal microscopy, multi-photon microscopy) the 3D scanning of planes at arbitrary orientation, curved surfaces, and targeted scanning are still challenges. In optical manipulation, this limits the number of traps that can be created and the size of the objects that can be out-of-plane rotated, for instance.

The following documents give examples of optical devices: US 2020/018940 A1 discloses a microscope comprising an objective and a reverberation cavity with a deformable mirror for repeatedly reflecting a laser beam, GERENA Edison et al:"High-Bandwidth 3-D Multitrap Actuation Technique for 6-DoF Real-Time Control of Optical Robots", IEEE ROBOTICS AND AUTOMATION LETTERS, IEEE, vol. 4, no. 2, 1 April 2019, pages 647-654, DOI: 10.1109/LRA.2019.2892393, discloses an approach to generate and control several optical traps synchronously in 3-D with low latency and high bandwidth using only mirrors including a deformable mirror, and EP 1 744 194 A1 discloses a laser scanning microscope comprising a deformable mirror and an objective lens

The present invention proposes to remedy these drawbacks.

To this end, a device for controlling the axial position of a laser focal point produced by a microscope objective is defined in claim 1 and comprises:
- a laser source for emitting a laser beam,
- a deformable mirror for focusing or defocusing the laser beam axially,
- a microscope objective for focusing the laser beam coming from the deformable mirror on a laser focal point.

The device according to the invention further comprises a system for guiding the laser beam emitted by the laser source several times on the deformable mirror before the laser beam enters the microscope objective

Thus, by guiding the laser beam several times on the same deformable mirror, the focalisation (in the case of a concave configuration of the deformable mirror) or the defocalisation (in the case of a convex configuration of the deformable mirror) is amplified. Therefore, the convergence of the laser beam at the entrance of the microscope objective is increased (in the case of a concave configuration of the deformable mirror) or the divergence of the laser beam at the entrance of the microscope objective is increased (in the case of a convex configuration of the deformable mirror) . Thus, the axial position of the laser focal point can be increased (in the case of a concave configuration of the deformable mirror) or decreased (in the case of a converging configuration of the deformable mirror). The invention allows the high-speed motion control of the laser focal point in a large working space. As for a given axial position, the deformable mirror has less amplitude of deformation (compared to the case in which the laser beam is guided only once on the deformed mirror) the settling times of the system is reduced, increasing the scanning frequency. As the device is still solely based on mirrors, the light path is bidirectional, i.e. the path is independent from the propagation direction, and the optical efficiency is maximized.

The invention enlarges the actuation axis workspace by using several "virtual" deformable mirrors in series. The idea is to guide the laser beam several times on the same deformable mirror using a set of mirrors. By ensuring that virtual deformable mirrors are placed on conjugate planes of the entrance aperture of the objective, it is possible to increase considerably the workspace, while ensuring that the size of the laser beam diameter at the entrance aperture of the objective remain the same, regardless the degree of convergence or divergence of the laser beam, and the movement of the laser focal point in the axial direction.

The system for guiding the laser beam several times on the deformable mirror comprises at least one set of two mirrors for guiding the laser beam between two successive reflections of the laser beam on the deformable mirror.

The system for guiding the laser beam several times on the deformable mirror comprises an optical relay system for conjugating the deformable mirror plane with the next deformable mirror plane between two consecutive reflections of the laser beam on the deformable mirror.

The optical relay system can comprise an afocal system with two positive lenses (or one negative and one positive lens).

The device can comprise a planar scanning system for controlling the planar position of the laser focal point. The planar scanning system is typically a galvanometer mirror.

The device can comprise a first optical relay system placed between the deformable mirror and the planar scanning system and a second optical relay system placed between the planar scanning system and the microscope objective, for conjugating the deformable mirror and the planar scanning system with the entrance aperture of the microscope objective.

The device can be an optical manipulation device, a two-photon polymerization device, a confocal microscopy device, a multi-photon microscopy device or an optogenetics device, or any other device that needs 3D fast scanning laser.

Other aims, features and advantages of the invention will emerge from reading the following description, given purely by way of non-limiting example, and with reference to the accompanying drawings in which:
- Figure 1 is a schematic view of a a device for controlling the axial position of a laser focal point produced by a microscope objective according to the prior art,
- Figure 2 is a schematic view of a a device for controlling the axial position of a laser focal point produced by a microscope objective according to the invention,
- Figure 3 is a partial view of the device of figure 2,
- Figure 4 is a schematic view of a device with an actuation system according to the prior art, in a first embodiment,
- Figure 5 is a schematic view of a device with an actuation system according to the invention, in a first embodiment,
- Figure 6 is a schematic view of a device with an actuation system according to the prior art, in a second embodiment,
- Figure 7 is a schematic view of a device with an actuation system according to the invention, in a second embodiment,
- Figure 8 is a schematic view of a device with an actuation system according to the invention, in a second embodiment,
- Figure 9 is a schematic view of a device with an actuation system according to the prior art, in a third embodiment,
- Figure 10 is a schematic view of a device with an actuation system according to the invention, in a third embodiment, and
- Figures 11 to 15 represent schematically various embodiments of a device according to the invention.

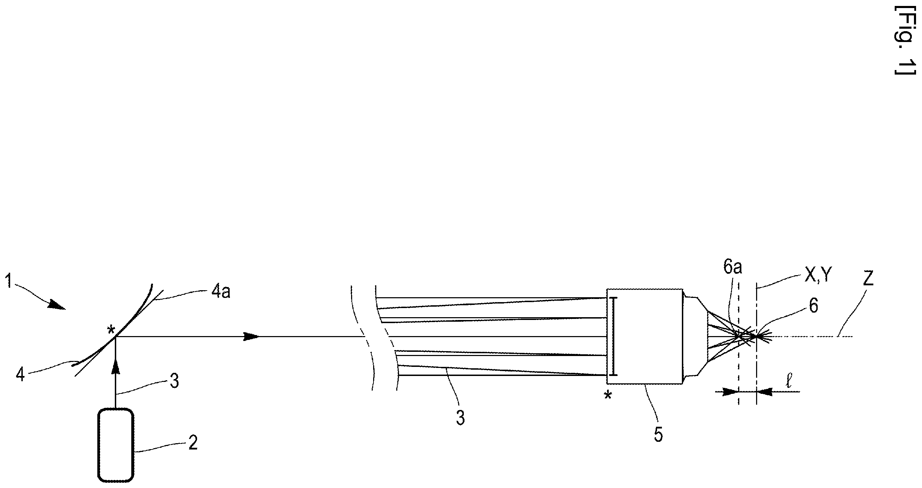

As shown in figure 1, a device 1 for controlling the axial position of a laser focal point produced by a microscope objective according to the prior art comprises a laser source 2 which emits a laser beam 3.

The laser beam 3 passes through an actuation system for controlling the three-dimensional position of the laser focal point, i.e. in the axial Z direction as well as in the planar X, Y directions. It includes a deformable mirror 4 for controlling the axial Z position of the laser focal point and a galvanometer (not shown) for controlling the planar X, Y position of the laser focal point.

A microscope objective 5 is used to focus the laser beam 3 coming from the actuation system on the laser focal point 6 and to image the laser focal point 6.

The deformable mirror 4 which can focus or defocus the laser beam 3 is used on the Z axis. The deformable mirror 4 and the galvanometer are preferably positioned in a conjugate plane on the entrance aperture of the microscope objective 5. Hence, the laser beam 3 will pivot around the entrance aperture of the microscope objective 6 and retain the same degree of overfilling, independently of the angle or the degree of collimation of the incident beam 2, producing equally and efficient laser focal points 6. The conjugate planes are pictured by the symbols "*".

When the deformable mirror 4 is in a flat configuration (position 4a in figure 1), the microscope objective 5 focuses the laser beam 3 on the laser focal point 6a. When the deformable mirror 4 is not in a flat configuration, for instance when it is in a convex configuration, as shown in figure 1, the microscope objective 5 focuses the laser beam 3 on the laser focal point 6. The laser focal point 6 is located a distance 1 from the laser focal point 6a.

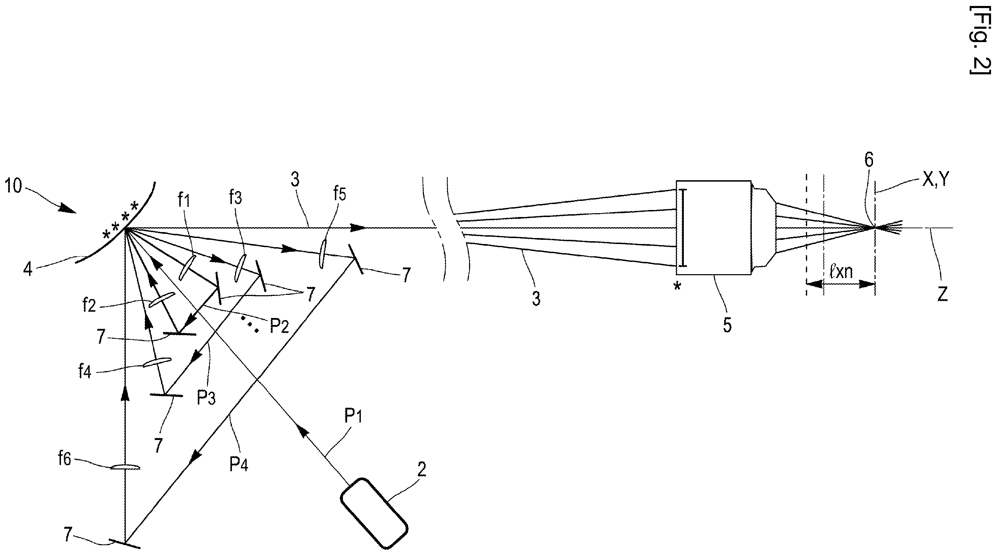

According to the invention, and as shown in figure 2, the device 10 further comprises a system for guiding the laser beam 3 coming from the laser source 2 several times on the deformable mirror 4.

The system includes a plurality of mirrors 7. For instance, two reflecting mirrors 7 can be used between two successive reflections of the laser beam 3 on the deformable mirror 4.

The laser beam 3 coming from the laser source 2 is directed to the deformable mirror (passage P1 of the laser beam 3). Then a second passage P2 of the laser beam 3 is performed using two mirrors 7. In the same manner, successive passages P3 and P4 are then carried out. Of course the number of passages is not limited and thus Pn passages can be carried out in the same manner.

Thus, by passing the laser beam 3 coming from the laser source consecutively several times through the deformable mirror 4, the defocalisation is amplified and therefore the angle of the laser beam at the entrance of the microscope objective is increased. Thus, the axial position of the laser focal point 6 is increased. 1 being the axial position of the laser focal point 6 from the axial position of the laser focal point 6a in the case of a flat configuration of the deformable mirror 4 (figure 1), the axial position of the laser focal point 6 from the axial position of the laser focal point 6a when the laser beam passes four times through the deformable mirror 4 is around 4*l. More generally, the axial position of the laser focal point 6 from the axial position of the laser focal point 6a after n passages of the laser beam through the deformable mirror 4 is approximately l*n.

Deformation of the deformable mirror is used to changing their focal length as well as compensating for optical aberrations.

The workspace and the bandwidth are dependent of the used deformable mirror. In current system, the full working range of the axial displacement is estimated for instance as 10 µm between the maximal and minimal defocusing position of the deformable mirror and can be performed at 200Hz for instance (limited by the time of travel of the mirror between his maximal position to his minimal position). For small relative displacements in the z axis (below 2 µm, for instance), the sampling rate can be increased (typically to 2 kHz) as the deformable mirror maximal and minimal deformation is smaller.

With the invention, using the same deformable mirror, if the laser beam is deflected six times through the deformable mirror, the axial workspace will be approximatively of 60 µm at 200 Hz or around 12µm at 2 KHz. Therefore, this new solution will enlarge the working space and also the bandwidth.

At each passage of the laser beam 3 through the deformable mirror 4, the deformable mirror 4 is advantageously conjugated with the entrance aperture of the microscope objective 5. To this end, the system for guiding the laser beam 3 several times on the deformable mirror 4 comprises, between two consecutive reflections of the laser beam 3 on the deformable mirror, an optical relay for conjugating the deformable mirror 4 with the deformable mirror 4 itself. The optical relay system can be an afocal system with a set of two positive lens, where the distance between the two lens is equal to the sum of each element's focal length.

For the passage P2, the beam coming from the deformable mirror 4 passes successively through a first lens f1, a first mirror 7, a second mirror 7, a second lens f2 and the deformable mirror 4 again. For the passage P3, the beam coming from the deformable mirror 4 passes successively through a first lens f3, a first mirror 7, a second mirror 7, a second lens f4 and the deformable mirror 4 again. For the passage P4, the beam coming from the deformable mirror 4 passes successively through a first lens f5, a first mirror 7, a second mirror 7, a second lens f6 and the deformable mirror 4 again.

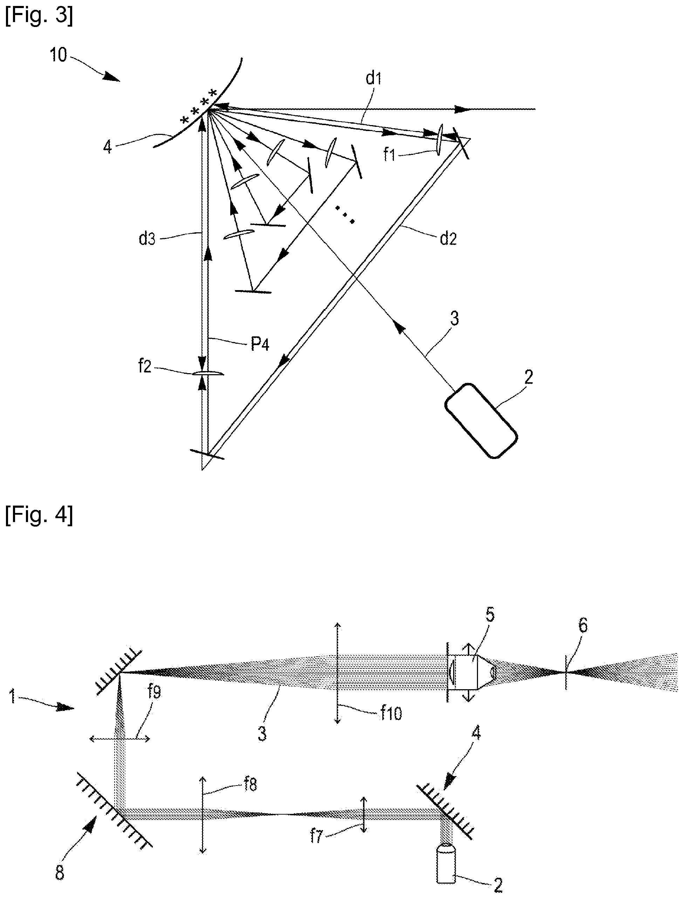

As shown in figure 3, for instance for a passage P4, d1 is the length of the laser beam 3 path between the deformable mirror 4 and a first lens f1, d2 is the length of the laser beam 3 path between the first lens f1 and the second lens f2, d3 is the length of the laser beam 3 path between the second lens f2 and the deformable mirror 4, f1 being the focal length of the first lens f1 and f2 being the focal length of the second lens f2.

In the afocal system (d2=f1+f2), two successive passages of the laser beam 3 on the deformable mirror 4 are conjugated if d1, d2, d3, f1 and f2 satisfy the following relation (with the thin-lens formalism):$d 1 = f 1 / f 2 * \left(f1+f2-f1/f2*d3\right)$

To image the same surface diameter of the deformable mirror in each passage, the magnification of the afocal telescope can be set to 1:1. In this case f1=f2, then d1=2f1-d3. If d3=f1, then d1=f1, making the optical relay system a 4f system.

As illustrated on figure 4, an actuation system controls the three-dimensional position of the laser focal point 6, i.e in the axial Z direction as well as in the planar X, Y directions. It includes the deformable mirror 4 and a galvanometer 8 which are used to control the axial Z and the planar X, Y positions of the laser focal point 6 respectively.

The deformable mirror 4 which can focus or defocus the laser beam 2 is used on the Z axis. The deformable mirror 4 and the galvanometer 8 are preferably positioned in a conjugate plane on the entrance aperture of the microscope objective 5. Hence, the laser beam 3 will pivot around the entrance aperture of the microscope objective 5 and retain the same degree of overfilling, independently of the angle and the degree of collimation of the incident beam 3.

The deformable mirror 4 can be a microelectromechanical component with 111 actuators and 37 piston-tip-tilt segments with an update rate of 2 kHz. Each segment has 700 µm diameter while the array has an aperture of 3.5 mm and with a maximum dynamic range (Stroke) of 5 µm. Electrostatic actuation allows precise positioning of each segment with nanometer and microradian resolution (wavefront resolution <15 nm rms).

The laser beam 3 is guided into the microscope objective 5 through the galvanometer 8, the deformable mirror 4, and standard optical elements. Two afocal systems with lens f7, f8 and f9, f10 are preferably used to conjugate the two actuators 4, 8 with the entrance aperture of the microscope objective 5 and to expand the laser beam 3.

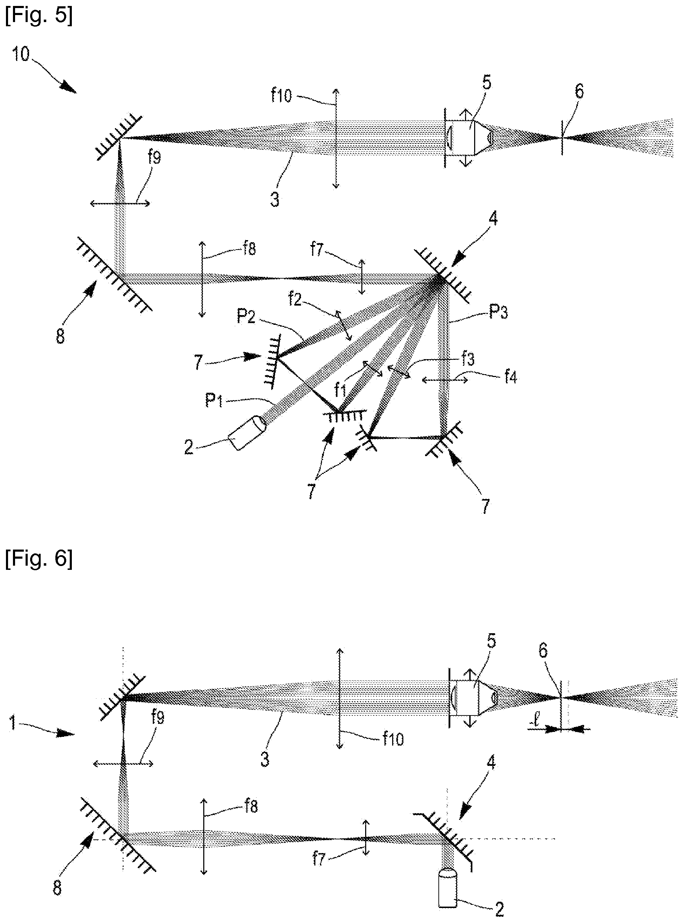

Figures 4 and 5 show the deformable mirror 4 is in a flat configuration. Figure 4 illustrates a laser beam 3 passing one time through the deformable mirror 4 whereas figure 5 illustrates a laser beam 3 passing three times through the deformable mirror 4. The laser focal point 6 has the same axial position in figure 4 and in figure 5.

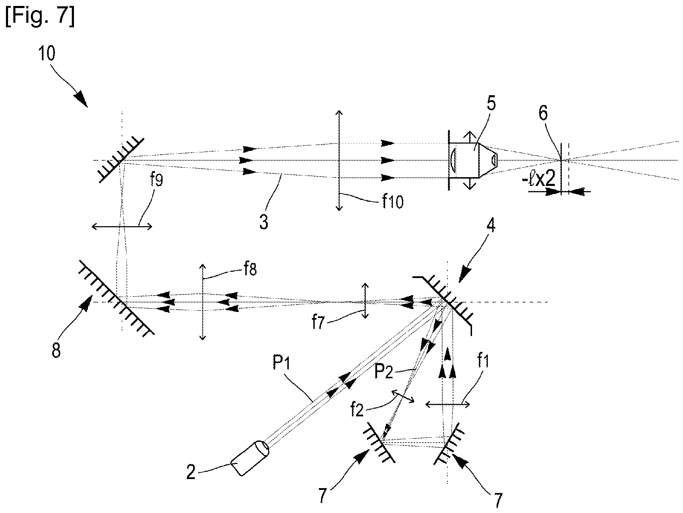

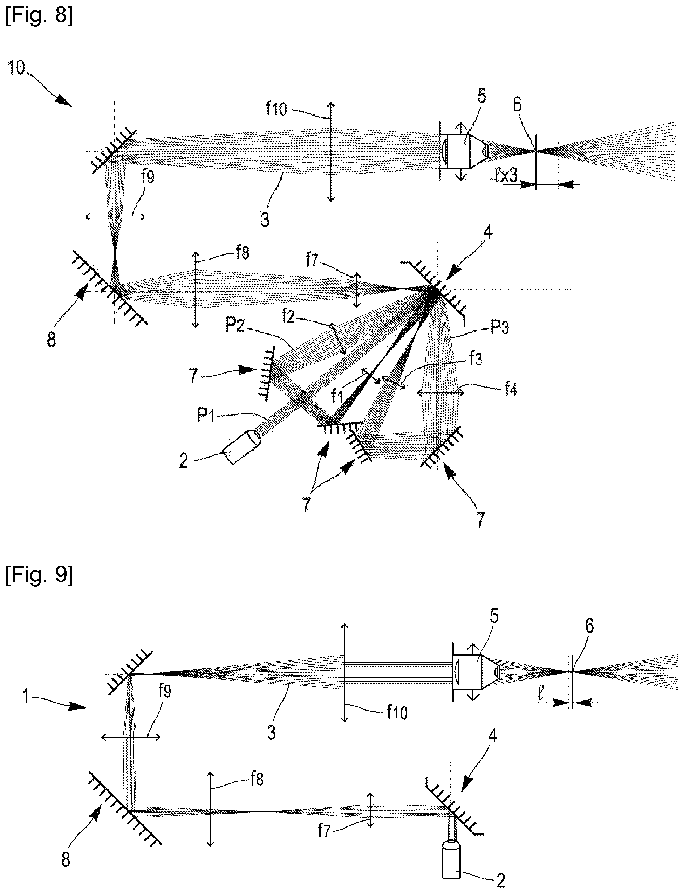

In a second embodiment, as illustrated in figures 6, 7 and 8, the deformable mirror 4 is in a focalisation configuration (i.e. the deformable mirror 4 is in a concave configuration) . When the laser beam 3 passes one time through the deformable mirror 4 (figure 6), the axial position of the laser focal point 6 is decreased from 1 compared to the laser focal point reference when the deformable mirror is in a flat configuration (figure 4). When the laser beam 3 passes two times through the deformable mirror 4 (figure 7), the axial position of the laser focal point 6 is decreased from around 21 compared to the laser focal point reference when the deformable mirror 4 is in a flat configuration. When the laser beam 3 passes three times through the deformable mirror 4 (figure 8), the axial position of the laser focal point 6 is decreased from around 31 compared to the laser focal point reference when the deformable mirror 4 is in a flat configuration.

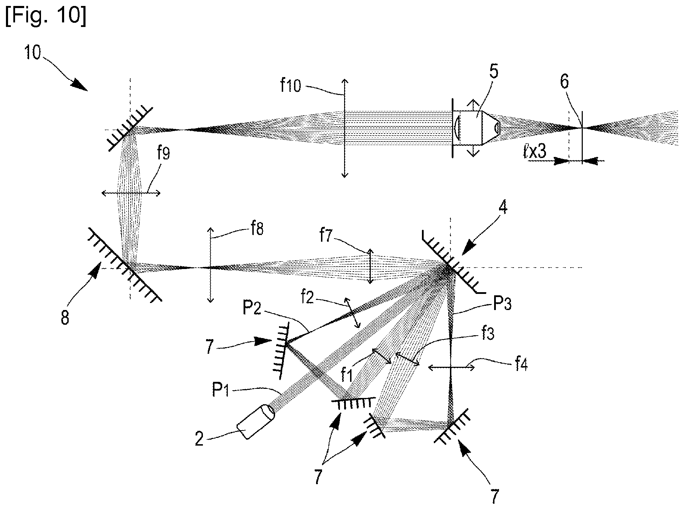

In a third embodiment, as illustrated in figure 9 and 10, the deformable mirror 4 is in a defocalisation configuration (i.e. the deformable mirror 4 is in a convex configuration) . When the laser beam 3 passes one time through the deformable mirror 4 (figure 9), the axial position of the laser focal point 6 is increased from 1 compared to the laser focal point reference when the deformable mirror is in a flat configuration (figure 4). When the laser beam 3 passes three times through the deformable mirror 4 (figure 10), the axial position of the laser focal point 6 is increased from around 31 compared to the laser focal point reference when the deformable mirror 4 is in a flat configuration.

The actuation system as described above can be used in several devices according to the invention.

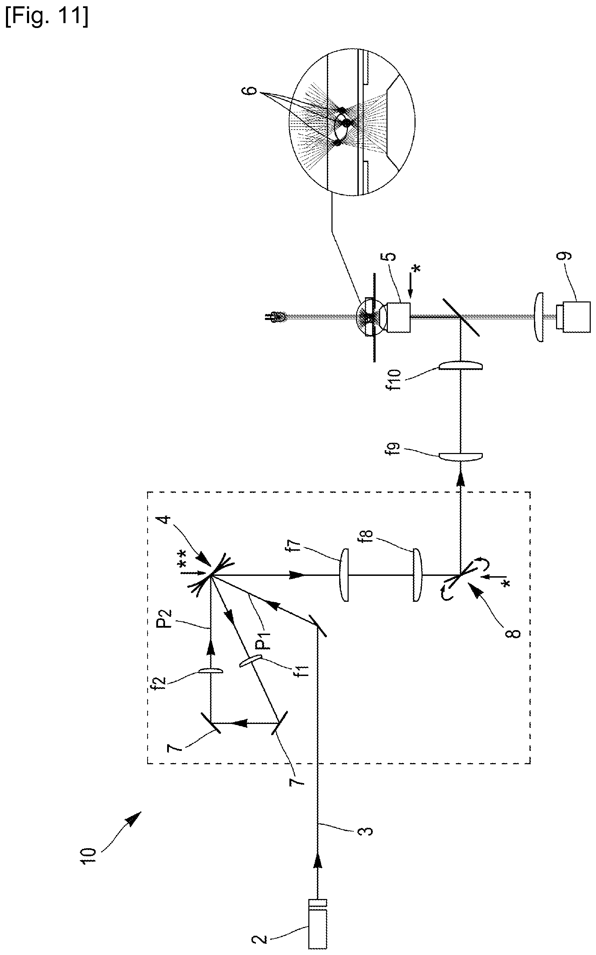

The device 10 according to the invention can be used for optical manipulation, typically for trapping a plurality of objects (figure 11). In this case, the laser beam 3 is deflected by the actuation system 4, 8 between several trapping points 6. A camera 9 determines the position of each of the trapped objects.

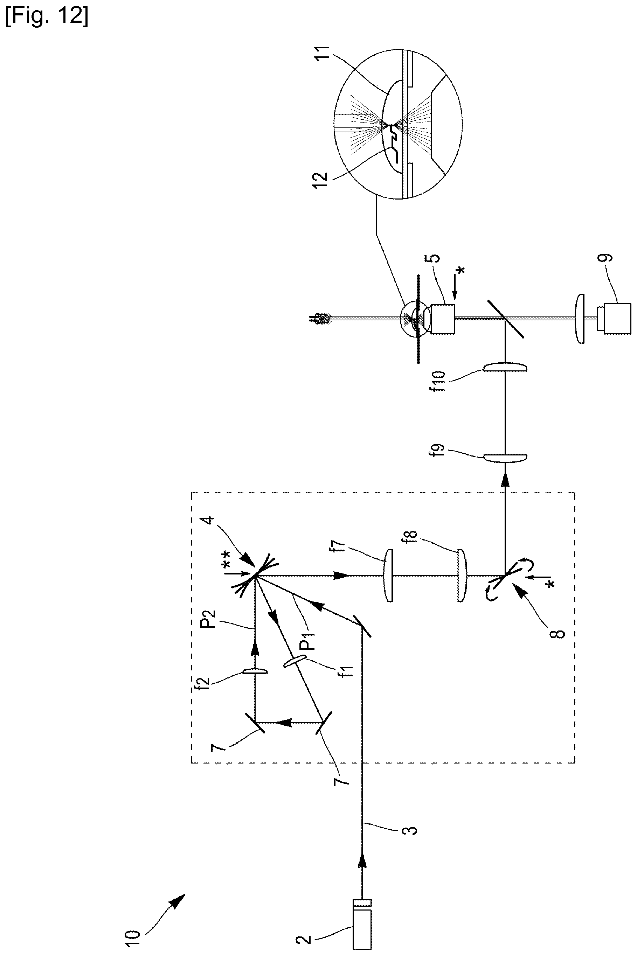

As illustrated in figure 12, the device 10 according to the invention can be used for multi-photon polymerization.

Two photons or more can be absorbed simultaneously by a photo-sensitive polymer 11 in a very small volume called "voxel" at the laser focal point 6. A chemical reaction starts, and the liquid monomer becomes a solid polymer inside the voxel and a structure 12 is formed.

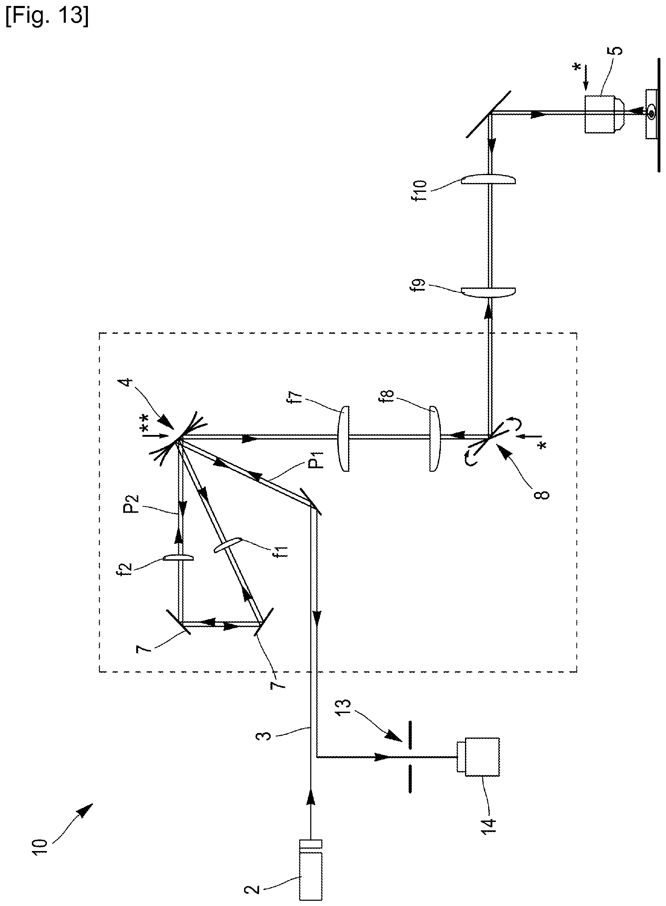

In another embodiment, the device 10 is a confocal microscopy device (figure 13). Confocal microscopy is an optical imaging technique for increasing optical resolution and contrast of a micrograph by means of using a spatial pinhole 13 to block out-of-focus light in image formation.

As the system advantageously only uses mirrors, and the light path is bidirectional, the detector can be used in a "descanned" configuration, where the emitted light returns along the same path as the excitation laser beam. Capturing multiple two-dimensional images at different depths in a sample with a high-sensitivity detector 14, such as a photomultiplier tube enables the reconstruction of three-dimensional structures within an object.

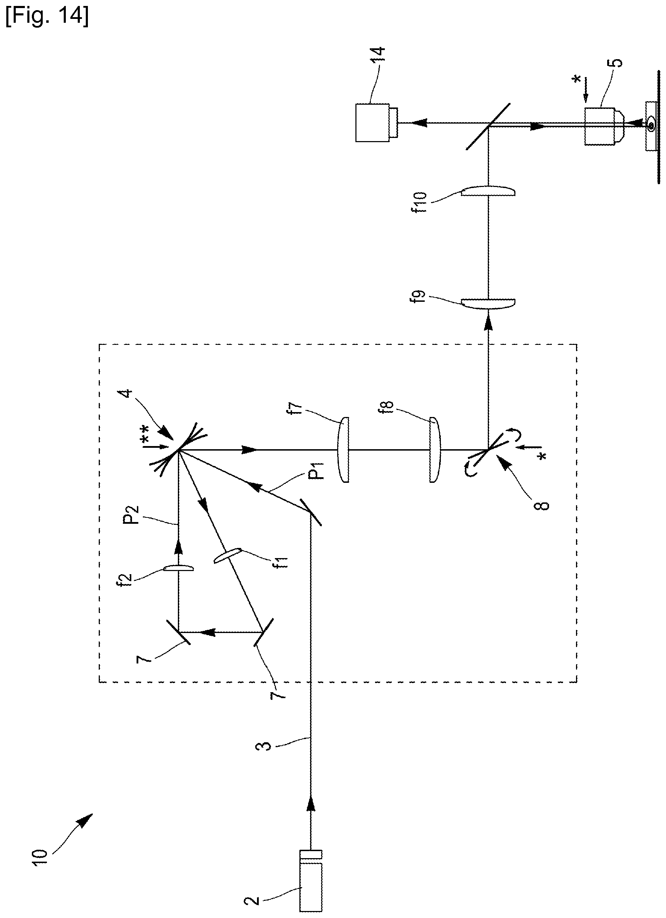

In another embodiment, the device 10 is a multi-photon microscopy device (figure 14). Two-photon excitation microscopy is a fluorescence imaging technique that allows imaging of living tissue up to about one millimeter in thickness. Unlike traditional fluorescence microscopy, in which the excitation wavelength is shorter than the emission wavelength, two-photon excitation requires simultaneous excitation by two photons with longer wavelength than the emitted light. Two-photon excitation microscopy typically uses near-infrared excitation light which can also excite fluorescent dyes. The fluorescence from the sample is then collected by a light detector 14, such as a photomultiplier tube.

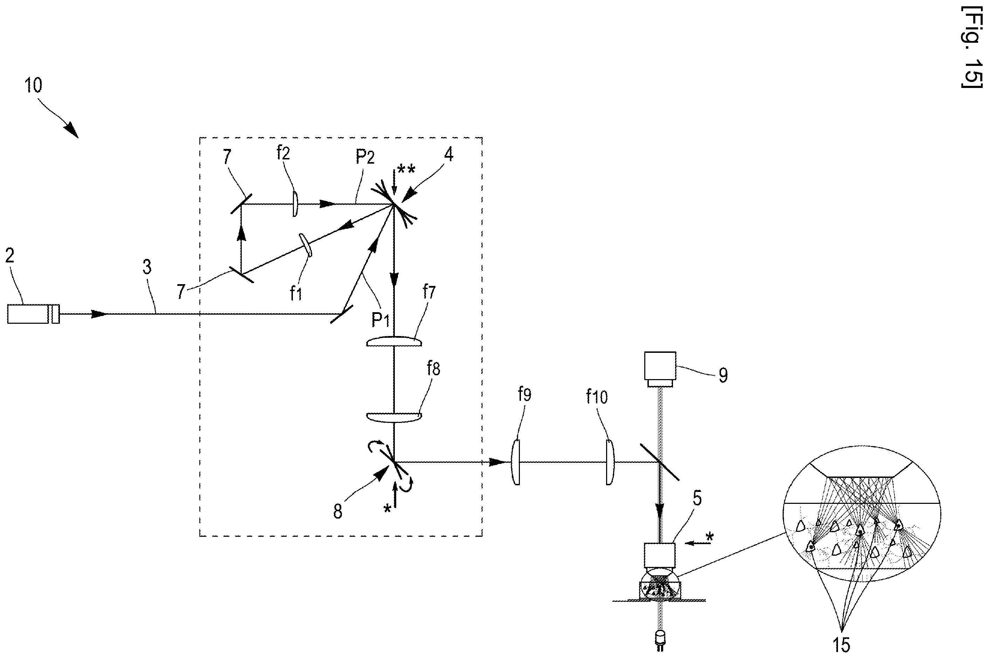

In a last embodiment, the device 10 is an optogenetics device using a camera 9 (figure 15). Optogenetics most commonly refers to a biological technique that involves the use of light to control neurons that have been genetically modified to express light-sensitive ion channels. Thus, the laser beam 3 is used for activating photosensitive cells 15.

## Claims

1. Device (10) for controlling the axial position of a laser focal point (6) produced by a microscope objective (5) of the device, comprising:
- a laser source (2) for emitting a laser beam (3),
- a deformable mirror (4) for focusing or defocusing the laser beam (3) axially,
- the microscope objective (5) for focusing the laser beam (3) coming from the deformable mirror (4) on a laser focal point (6),
- a system (7) for guiding the laser beam (3) emitted by the laser source (2) several times on the deformable mirror (4) before the laser beam (3) enters the microscope objective (5), wherein the system (7) for guiding the laser beam (3) several times on the deformable mirror (4) comprises at least one set of two mirrors (7) for guiding the laser beam (3) between two successive reflections (P1, P2, P3, P4, ... Pn) of the laser beam (3) on the deformable mirror (4), and
**characterized in that** said system (7) further comprises an optical relay system (f1, f2; f3, f4; f5, f6) for conjugating the deformable mirror (4) plane with the next deformable mirror (4) plane between said two consecutive reflections (P1, P2, P3, P4, ... Pn).

2. Device (10) according to claim 1, **characterized in that** the optical relay system (f1, f2; f3, f4; f5, f6) between two consecutive reflections comprises an afocal system with two positive lenses or one negative and one positive lens.

3. Device (10) according to any one of claims 1 to 2, **characterized in that** it comprises a planar scanning system (8) for controlling the planar (X, Y) position of the laser focal point (6).

4. Device (10) according to claim 3, **characterized in that** the planar scanning system (8) is a galvanometer mirror.

5. Device (10) according to any one of claims 3 to 4, **characterized in that** it comprises a first optical relay system (f₇, f₈) placed between the deformable mirror (4) and the planar scanning system (8) and a second optical relay system (f₉, f₁₀) placed between the planar scanning system (8) and the microscope objective (5), for conjugating the deformable mirror (4) and the planar scanning system (8) with the entrance aperture of the microscope objective (5).

6. Device (10) according to any one of claims 1 to 5, **characterized in that** the device is an optical manipulation device, a two-photon polymerization device, a confocal microscopy device, a two-photon microscopy device or an optogenetics device.

## Patentansprüche

1. Vorrichtung (10) zur Steuerung der axialen Position eines Laserfokuspunktes (6), der von einem Mikroskopobjektiv (5) der Vorrichtung erzeugt wird, umfassend:
- eine Laserquelle (2) zum Emittieren eines Laserstrahls (3),
- einen verformbaren Spiegel (4) zum axialen Fokussieren oder Defokussieren des Laserstrahls (3),
- das Mikroskopobjektiv (5), um den Laserstrahl (3), der von dem verformbaren Spiegel (4) kommt, auf einen Laserfokuspunkt (6) zu fokussieren,
- ein System (7) zum mehrmaligen Leiten des Laserstrahls (3), der von der Laserquelle (2) emittiert wird, auf den verformbaren Spiegel (4), bevor der Laserstrahl (3) in das Mikroskopobjektiv (5) eintritt, wobei das System (7) zum mehrmaligen Leiten des Laserstrahls (3) auf den verformbaren Spiegel (4) mindestens einen Satz von zwei Spiegeln (7) umfasst, um den Laserstrahl (3) zwischen zwei aufeinanderfolgenden Reflexionen (P1, P2, P3, P4, ... Pn) des Laserstrahls (3) auf den verformbaren Spiegel (4) zu leiten, und
**dadurch gekennzeichnet, dass** das System (7) ferner ein optisches Relaissystem (f1, f2; f3, f4; f5, f6) zum Konjugieren der Ebene des verformbaren Spiegels (4) mit der Ebene des nächsten verformbaren Spiegels (4) zwischen den beiden aufeinanderfolgenden Reflexionen (P1, P2, P3, P4, ... Pn) umfasst.

2. Vorrichtung (10) nach Anspruch 1, **dadurch gekennzeichnet, dass** das optische Relaissystem (f1, f2; f3, f4; f5, f6) zwischen zwei aufeinanderfolgenden Reflexionen ein afokales System mit zwei positiven Linsen oder einer negativen und einer positiven Linse umfasst.

3. Vorrichtung (10) nach einem der Ansprüche 1 bis 2, **dadurch gekennzeichnet, dass** es ein planares Abtastsystem (8) zur Steuerung der planaren (X, Y) Position des Laserfokuspunktes (6) umfasst.

4. Vorrichtung (10) nach Anspruch 3, **dadurch gekennzeichnet, dass** das planare Abtastsystem (8) ein Galvanometerspiegel ist.

5. Vorrichtung (10) nach einem der Ansprüche 3 bis 4, **dadurch gekennzeichnet, dass** es ein erstes optisches Relaissystem (f₇, f₈), das zwischen dem verformbaren Spiegel (4) und dem planaren Abtastsystem (8) angeordnet ist, und ein zweites optisches Relaissystem (f₉, f₁₀), das zwischen dem planaren Abtastsystem (8) und dem Mikroskopobjektiv (5) angeordnet ist, umfasst, um den verformbaren Spiegel (4) und das planare Abtastsystem (8) mit der Eingangsapertur des Mikroskopobjektivs (5) zu konjugieren.

6. Vorrichtung (10) nach einem der Ansprüche 1 bis 5, **dadurch gekennzeichnet, dass** die Vorrichtung eine optische Manipulationsvorrichtung, eine Zwei-Photonen-Polymerisationsvorrichtung, eine konfokale Mikroskopie-Vorrichtung, eine Zwei-Photonen-Mikroskopie-Vorrichtung oder eine Optogenetik-Vorrichtung ist.

## Revendications

1. Dispositif (10) pour commander la position axiale d'un point focal laser (6) produit par un objectif de microscope (5) du dispositif, comprenant :
- une source laser (2) pour émettre un faisceau laser (3),
- un miroir déformable (4) pour focaliser ou défocaliser axialement le faisceau laser (3),
- l'objectif de microscope (5) pour focaliser le faisceau laser (3) provenant du miroir déformable (4) sur un point focal laser (6),
- un système (7) pour guider le faisceau laser (3) émis par la source laser (2) plusieurs fois sur le miroir déformable (4) avant que le faisceau laser (3) n'entre dans l'objectif de microscope (5), dans lequel le système (7) pour guider le faisceau laser (3) plusieurs fois sur le miroir déformable (4) comprend au moins un ensemble de deux miroirs (7) pour guider le faisceau laser (3) entre deux réflexions (P₁, P₂, P₃, P₄, ... Pₙ) successives du faisceau laser (3) sur le miroir déformable (4), et
**caractérisé en ce que** ledit système (7) comprend en outre un système de relais optique (f₁, f₂ ; f₃, f₄ ; f₅, f₆) pour conjuguer le plan du miroir déformable (4) avec le plan du miroir déformable (4) suivant entre lesdites deux réflexions (P₁, P₂, P₃, P₄, ... Pₙ) consécutives.

2. Dispositif (10) selon la revendication 1, **caractérisé en ce que** le système de relais optique (f₁, f₂ ; f₃, f₄ ; f₅, f₆) entre deux réflexions consécutives comprend un système afocal doté de deux lentilles positives ou d'une lentille négative et d'une lentille positive.

3. Dispositif (10) selon l'une quelconque des revendications 1 et 2, **caractérisé en ce qu'**il comprend un système de balayage plan (8) pour commander la position plane (X, Y) du point focal laser (6).

4. Dispositif (10) selon la revendication 3, **caractérisé en ce que** le système de balayage plan (8) est un miroir galvanométrique.

5. Dispositif (10) selon l'une quelconque des revendications 3 et 4, **caractérisé en ce qu'**il comprend un premier système de relais optique (f₇, f₈) placé entre le miroir déformable (4) et le système de balayage plan (8) et un deuxième système de relais optique (f₉, f₁₀) placé entre le système de balayage plan (8) et l'objectif de microscope (5), pour conjuguer le miroir déformable (4) et le système de balayage plan (8) avec l'ouverture d'entrée de l'objectif de microscope (5).

6. Dispositif (10) selon l'une quelconque des revendications 1 à 5, **caractérisé en ce que** le dispositif est un dispositif de manipulation optique, un dispositif de polymérisation à deux photons, un dispositif de microscopie confocale, un dispositif de microscopie à deux photons ou un dispositif d'optogénétique.
